# EUROPÄISCHE PATENTSCHRIFT

(11) **EP 2 898 990 B1**
(45) Veröffentlichungstag und Bekanntmachung des Hinweises auf die Patenterteilung: **06.07.2016**
(21) Anmeldenummer: 14198786.7
(22) Anmeldetag: 18.12.2014
(51) Int. Cl.: B25B 27/14, H01R 43/042, H01R 43/05

(54) **Abisolier- und Crimpzange mit Zwangssperre**
Stripping- and crimping tool having ratchet
Pince de sertissage et à dénuder dotée d'un dispositif de blocage

(30) Priorität: 27.01.2014 DE 202014100340 U
(43) Veröffentlichungstag der Anmeldung: 29.07.2015
(73) Patentinhaber: KRAMPE Immobilien GmbH & Co. KG, 59387 Ascheberg (DE)
(72) Erfinder: Bünnigmann, Carsten, 59387 Ascheberg (DE)
(74) Vertreter: Straube, Urs Norman

(56) Entgegenhaltungen:
- EP-A2- 0 241 798
- DE-A1- 4 413 748

## Beschreibung

Die Erfindung betrifft eine Abisolier- und Crimpzange zum Verdrillen eines teilweise freigelegten Endbereichs einer Litzenleitung durch am freien Ende der Zangenbacken in das Zangenmaul vorspringende Stege, und zum Vercrimpen des freigelegten und verdrillten Endbereichs der Litzenleitung mit einer Aderendhülse durch einen im Kreuzungsbereich der Zangenschenkel in einer Kassette geführten Pressstempel, der durch eine Schließkraft beim Zusammendrücken der Zangenschenkel in ein Gesenk läuft, zum Verpressen der im Gesenk befindlichen Aderendhülse.

Durch Crimpen wird eine homogene, nicht lösbare Verbindung zwischen Leiter und Verbindungselement hergestellt. Hierzu existieren Crimpzangen für Aderendhülsen und Crimpzangen für sonstige Kontakte, unter anderem etwa für Flachsteckhülsen und Flachstecker, für Kabelschuhe und Verbinder, für Lichtwellenleiter sowie für Koaxialverbinder. Wesentliche Gütekuterien beim Crimpen sind die erreichte Zugfestigkeit der Verbindung sowie die Vermeidung typischer Crimpfehler. In einem hochwertigen Werkzeug können verschiedene Funktionen integriert sein, wie beispielsweise Schneiden, Abisolieren, Verdrillen und Crimpen. Hierbei wird mit einer Seitenschneidevorrichtung der Leiter auf die erforderliche Länge abgeschnitten, mit einer Abisoliervorrichtung ein Leitungsende abisoliert und mit einer Drillvorrichtung das freigelegte Leitungsende verdrillt, wodurch ein sicheres Einführen des Leiters in die Aderendhülse gewährleistet ist, um abschließend in einer Cumpvoruchtung das Leitungsende mit der Aderendhülse zu vercrimpen. Durch Verformung der Aderendhülse und der feindrähtigen Leitung entsteht bei korrekter Ausführung eine gasdichte Verbindung.

Eine derartig zangenartiges Werkzeug ist aus der DE 44 13 748 A1 bekannt. Wichtig ist dabei zu erkennen, dass in dieser Zange die Funktionen zum Schneiden einer Litzenleitung, Abisolieren eines Endbereichs der Litzenleitung, Verdrillen des Endbereichs der Litzenleitung und Vercrimpen des Endbereichs der Litzenleitung mit einer Aderendhülse integriert sind. Dabei erfolgt das Verdrillen des teilweise freigelegten Endbereichs der Litzenleitung durch von den Zangenbacken ausgehende in das Zangenmaul vorspringende Stege. Das Vercrimpen des freigelegten und verdrillten Endbereichs der Litzenleitung mit einer Aderendhülse erfolgt durch einen Pressstempel, der unter Einwirkung der Schließkraft der Zange in ein Gesenk läuft, in dem sich die Aderendhülse befindet. In der Praxis hat sich gezeigt, dass nachteilig Fehler beim Crimpen auftreten, wenn nicht ausreichend Kraft beim Schließen der Zange aufgebracht wird oder sogar die Zange geöffnet wird, bevor der Pressstempel gegen die im Gesenk befindliche Aderendhülse aufgelaufen ist. Hierdurch wird die Litzenleitung unzureichend verpresst und Sauerstoff kann an die einzelnen feindrähtigen Leiter kommen. Als Folge davon kommt es zur Erhöhung des Übergangswiderstands zwischen der Litzenleitung und der Aderendhülse durch Korrosion an den einzelnen feindrähtigen Leitern. Zusätzlich besteht das Risiko, dass eine unvollständig verpresste Leitung aus der Aderendhülse gezogen werden kann. Andererseits darf die Crimpverbindung auch nicht zu stark gepresst werden, so dass der Querschnitt der Litzenleitung unzulässig verringert wird. Hierdurch kann die Stromtragfähigkeit der Verbindung aufgrund des reduzierten Querschnitts unzulässig reduziert werden. Weiterhin besteht das Risiko dass einzelne Leiter abgeschert werden können oder die Aderendhülse durch Risse oder Aufbrechen unbrauchbar wird.

In der EP 0 241 798 A2 ist eine Zange zum Verpressen von Kabelschuhen, Kabelverbindern u. dgl. mit elektrischen Leitern, Lichtwellenleitern usw. beschrieben, mit zwei relativ gegeneinander bewegbaren Zangengriffen und zwei zusammen ein Pressprofil bildende Pressbacken. Die Zange weist eine Zwangssperre mit einer Klinke und einem Zahnsegment auf, zum Verhindern des Öffnens der Zange ohne vorheriges Erreichen der Schließlage der Pressbacken. Hierbei ist für die bewegliche aber ortsfeste Lagerung der Klinke zusätzlich ein Druckhebel erforderlich, der gelenkig zwischen den beiden Zangengriffen angeordnet ist. Das Zahnsegment hingegen ist einstückig mit dem beweglichen Zangengriff ausgebildet. Bei dieser Zange handelt es sich lediglich um eine reine Crimpzange ohne eine weitere funktionale Integration einer Seitenschneidevomichtung, Abisoliervorrichtung und/oder Drillvorrichtung. Darüber hinaus ist die Ausgestaltung des Pressprofils für das Crimpen von Kabelschuhen und Kabelverbindern ausgelegt und damit ungeeignet für das Vercrimpen von Aderendhülsen.

In der DE 25 21 378 B2 ist eine Zange zum Verpressen von Kabelverbindern, Kabelschuhen o. dgl. mit elektrischen Leitern beschrieben, mit zwei relativ gegeneinander bewegbaren Zangenschenkeln und zwei Pressprofile aufweisende Pressbacken. Die Zange ist am Erreichen eines Totpunktes gehindert und in ihrer Schließstellung durch eine lösbare Sperre gesichert. Dabei erfolgt das Lösen der Sperre durch elastische Verformung eines die Sperre tragenden Zangenteils beim weiteren Zusammendrücken der Zangenschenkel. Hierbei ist eine federbeaufschlagte Klinke der Sperre am festen Zangenschenkel gelagert und eine Raste der Sperre an der beweglichen Pressbacke ausgebildet. Auch bei dieser Zange handelt es sich lediglich um eine reine Crimpzange ohne eine weitere funktionale Integration einer Seitenschneidevorrichtung, Abisoliervorrichtung und/oder Drillvorrichtung. Darüber hinaus ist die Ausgestaltung des Pressprofils für das Crimpen von Kabelverbindern und Kabelschuhen ausgelegt und damit ungeeignet für das Vercrimpen von Aderendhülsen.

Der Erfindung liegt die Aufgabe zugrunde, eine Abisolier- und Crimpzange der eingangs genannten Art so weiterzubilden, dass mit Hilfe einer Zwangssperre ein unbeabsichtigtes Öffnen der Zange während des Crimpens verhindert und somit eine gleichbleibend hohe Qualität und vollständige Verpressung von Litzenleitungen mit Aderendhülsen ermöglicht sind. Weiterhin liegt der Erfindung die Aufgabe zugrunde, die Zwangssperre mit der Drillvorrichtung zu integrieren, um die Herstellung der Zange zu vereinfachen.

Diese Aufgabe wird durch die Merkmale des Anspruchs 1 gelöst.

Ausführungsformen der Erfindung sind in den Unteransprüchen beschrieben.

Die Aufgabe wird erfindungsgemäß dadurch gelöst, dass in der an sich bekannten Ausführung der Abisolier- und Crimpzange zum Verdrillen und zum Vercrimpen des Endbereichs einer Litzenleitung eine Zwangssperre mit einer Sperrklinke und einem Zahnsegment vorgesehen ist, zum Verhindern des Öffnens der Abisolier- und Crimpzange ohne vorheriges Auflaufen des Pressstempels gegen die im Gesenk befindliche Aderendhülse. Hierbei weist das Zahnsegment einen der Bewegungskurve der Zahnbacken entsprechenden Verlauf auf und ist an einem ersten Formteil angeordnet. Die Sperrklinke ist mittels einer Feder federnd beweglich, aber ortsfest gelagert und an einem zweiten Formteil angeordnet. Darüber hinaus sind das erste Formteil und das zweite Formteil jeweils an einer der beiden Zangenbacken angeordnet und ragen in das Zangenmaul hinein, wobei keine funktionale Einschränkung der Abisoliervorrichtung und/oder der Drillvorrichtung zum Abisolieren und Verdrillen des Endbereichs der Litzenleitung gegeben ist.

Zusätzlich sind das erste Formteil und/oder das zweite Formteil als eine einstückige Einheit mit den Stegen zum Verdrillen des teilweise freigelegten Endbereichs der Litzenleitung ausgebildet. Beispielsweise wird das entsprechende Formteil zusammen mit dem Steg mit Hilfe eines Kunststoff-Spritzgießverfahrens in einem Herstellungsschritt hergestellt.

Die Zwangssperre verhindert zuverlässig ein unbeabsichtigtes Öffnen der Zangenschenkel während des Crimpens. Infolgedessen werden Fehler beim Crimpen vermieden und zusätzliche Arbeitszeit eingespart. Die Zwangssperre gewährleistet eine korrekte Ausführung einer gasdichten Verbindung der Litzenleitung mit der Aderendhülse beim Crimpen sowie eine Zugfestigkeit der Verbindung.

Das Zahnsegment an dem ersten Formteil weist eine Vielzahl von Zähnen auf, die einstückig mit dem ersten Formteil ausgebildet sind. Überdies ist parallel zu den Zähnen eine Gleitfläche angeordnet. Zugleich weist die Sperrklinke eine Spitzecke auf, die beim Zusammendrücken der Zangenschenkel formschlüssig in die Zähne des Zahnsegments eingreift. Zusätzlich weist die Sperrklinke eine Nase auf, die beim Lösen der Zwangssperre auf der Gleitfläche des Zahnsegments entlang gleitet. Das zweite Formteil weist einen ersten Lagerzapfen auf, an dem die Sperrklinke drehbar gelagert ist. Weiterhin weist das zweite Formteil einen zweiten Lagerzapfen auf, an dem eine Feder mit einem Ende befestigt ist, deren gegenüberliegendes Ende in einer Öse der Sperrklinke gehalten ist. Hierdurch ist der Sperrhaken so angeordnet, dass er beim Zusammendrücken der Zangenschenkel über die Zähne gleitet, sich aber in der anderen Richtung darin verkeilt, so dass sich die Zangenschenkel nicht mehr öffnen lassen. Beim Gleiten des Sperrhakens über die Zähne sind Klickgeräusche hörbar, was die einfache und fehlerfreie Bedienung der Abisolier- und Crimpzange unterstützt.

Durch eine Presskraft beim weiteren Zusammendrücken der Zangenschenkel werden der freigelegte und verdrillte Endbereich der Litzenleitung mit der Aderendhülse in bekannter Weise vercrimpt und gleichzeitig läuft die Sperrklinke über das Zahnsegment hinaus, so dass die Zwangssperre damit freigegeben wird. Die Zangenschenkel lassen sich nun öffnen und der Sperrhaken gleitet mit der Nase ohne hörbare Geräusche über die Gleitfläche des Zahnsegments.

Die Zwangssperre kann der Anwender bei einer eventuellen Fehlbedienung der Abisolier- und Crimpzange jederzeit entriegeln. Dazu ist die Zwangssperre mit einer Auslöseeinrichtung versehen, die eine Kerbe am zweiten Formteil und einen Anschlag an der Sperrklinke umfasst, so dass beim Einführen eines Stiftes in die Kerbe und Drücken auf den Anschlag die Zwangssperre ausgelöst wird. Vorteilhaft ist an der Kerbe außerdem eine Markierung als Bedienungshinweis angebracht.

Darüber hinaus weist das erste Formteil und das zweite Formteil Löcher für die Befestigung an den jeweiligen Zangenbacken auf. Durch die Löcher werden passende Bolzen bzw. Schrauben gesteckt, die an vorbestimmter Position der Zangenbacken befestigt sind, so dass die Formteile mit den Zangenbacken verbunden sind.

Die Erfindung ist nachfolgend anhand von bevorzugten Ausführungsbeispielen unter Bezugnahme auf die Abbildungen beispielhaft erläutert. Dabei zeigt schematisch:
Fig. 1 eine bevorzugte Ausführungsform der erfindungsgemäßen Abisolier- und Crimpzange in Draufsicht,
Fig. 2 die Zwangssperre der Abisolier- und Crimpzange im Teilbereich der Zangenbacken in Schnittansicht,
Fig. 3 das erste Formteil der Zwangssperre in Detailansicht,
Fig. 4 das zweite Formteil der Zwangssperre in Detailansicht.

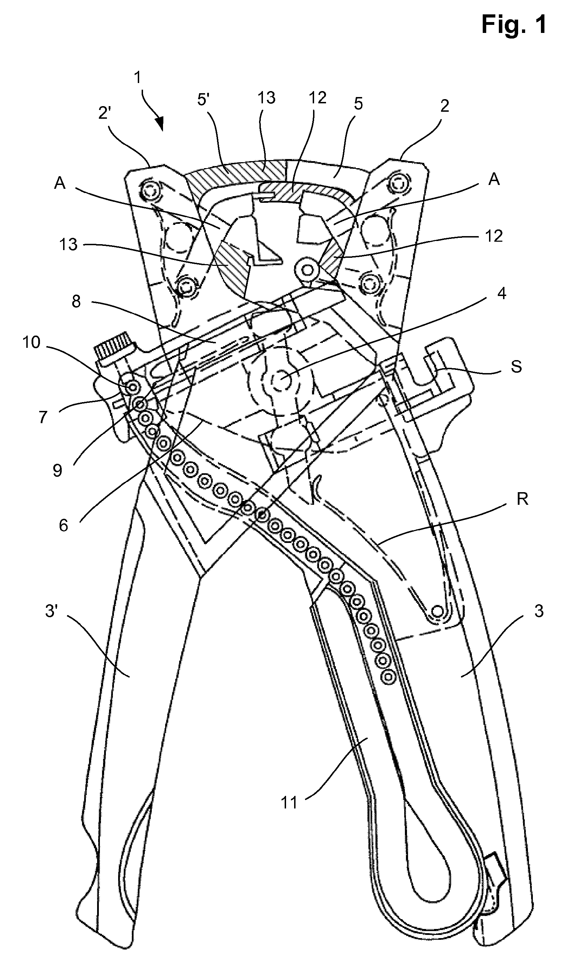

Fig. 1 zeigt schematisch eine bevorzugte Ausführungsform der erfindungsgemäßen Abisolier- und Crimpzange 1 in Draufsicht. Die Abisolier- und Crimpzange 1 ist hierbei als Ganzes dargestellt und besteht in bekannter Weise aus den durch die Achse 4 zusammengefassten Zangenschenkeln 3 und 3', deren obenseitige Überstände über die Achse 4 die beiden Zangenbacken 2 und 2' bilden. Die Zangenbacken 2, 2' sind mit der Abisoliervorrichtung A versehen, die Klemm- und Schneidelemente sowie einen Anschlag für den Endbereich einer Litzenleitung umfasst. Durch synchrones Verschwenken der korrespondierenden Schneidbacken und damit auch der korrespondierenden Klemmbacken erfolgt in einem ersten Schritt eine teilweise Freilegung bzw. Abisolierung des Endbereichs der Litzenleitung.

Weiterhin sind die Zangenbacken 2, 2' mit der Drillvorrichtung versehen, die die beiden Stege 5 und 5' mit Sägeblattabschnitten und einer Kehle umfassen. Durch Einlegen der im ersten Schritt abgetrennten Isolation der Litzenleitung in die Kehle und Zusammendrücken der Zangenschenkel 3, 3' erfolgt in einem zweiten Schritt das Verdrillen der feindrähtigen Leiter am teilweise freigelegten Endbereich der Litzenleitung, wobei möglichst gleichzeitig die abgetrennte Isolation komplett abgezogen wird.

Zusätzlich sind die Zangenbacken 2, 2'mit der Zwangssperre 14 versehen, die die beiden Formteile 12 und 13 mit der Sperrklinke 18 und dem Zahnsegment 15 umfasst. In der dargestellten Ausführungsform ist das zweite Formteil 13 einstückig mit dem Steg 5' ausgebildet. Wie in Fig. 1 leicht zu erkennen ist, resultiert weder durch das erste Formteil 12 noch durch das zweite Formteil 13 der Zwangssperre 14 eine funktionale Einschränkung der Abisoliervorrichtung A und/oder der Drillvorrichtung mit den beiden Stegen 5 und 5'.

Am Zangenschenkel 3 ist das Magazin 11 für einen Aderendhülsengurt mit einer Vielzahl von Aderendhülsen 10 lösbar gehalten, wobei die erste Aderendhülse 10 bis zum Anschlag in die Crimpposition eines Gesenks 7 geschoben wird, dessen Profil durch eine Stellschraube dem Durchmesser der Aderendhülse 10 angepasst werden kann. Durch Einführen des im zweiten Schritt verdrillte Endbereichs der Litzenleitung in die erste Aderendhülse und Zusammendrücken der Zangenschenkel 3, 3' erfolgt in einem dritten Schritt das Vercrimpen des freigelegten und verdrillten Endbereichs der Litzenleitung mit der Aderendhülse 10. Dabei trennt zuerst ein Messer 9 die Aderendhülse 10 vom Aderendhülsengurt und danach läuft ein Pressstempel 8 durch die Schließkraft beim Zusammendrücken der Zangenschenkel 3, 3'in das Gesenk 7, wobei der Pressstempel 8 in einer um die Achse 4 angeordneten Kassette 6 geführt ist.

Mit einer Seitenschneidevorrichtung S kann die Litzenleitung jederzeit leicht durchtrennt und auf die erforderliche Länge abgeschnitten werden. Mit Hilfe der Rückstellfeder R werden die Zangenschenkel 3, 3' in ihre Ausgangslage zurückgeführt.

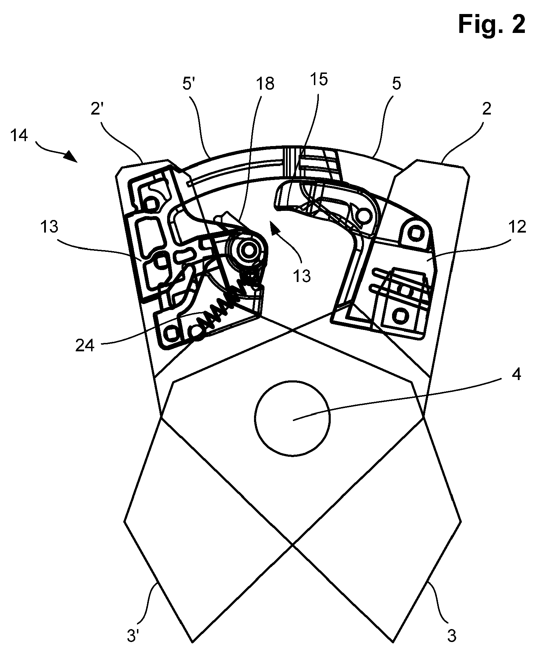

Fig. 2 zeigt die Zwangssperre 14 der Abisolier- und Crimpzange 1 im Teilbereich der Zangenbacken 2, 2' in Schnittansicht. Wie in Fig.1 detailliert beschrieben, umfasst die Zwangssperre 14 ein erstes Formteil 12 mit einem Zahnsegment 15 und ein zweites Formteil 13 mit einer Sperrklinke 18, die wiederum durch eine Feder 24 federnd beweglich, aber ortsfest am zweiten Formteil 13 angeordnet ist.

Dabei ist das erste Formteil 12 an der Zangenbacke 2 und das zweite Formteil 13 an der Zangenbacke 2' angeordnet. Das zweite Formteil 13 bildet mit dem Steg 5' eine Einheit. Die beiden Zangenbacken 2 und 2' kreuzen sich in der Achse 4 und nehmen ihren weiteren Verlauf in den beiden Zangenschenkeln 3 und 3'.

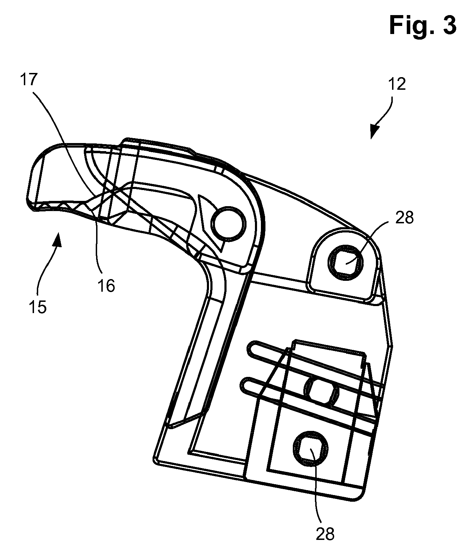

Fig. 3 zeigt das erste Formteil 12 der Zwangssperre 14 in Detailansicht. Das erste Formteil 12 umfasst am freien Ende das Zahnsegment 15, das in das Zangenmaul zwischen den beiden Zangenbacken 2, 2' ragt. Dabei weist das Zahnsegment 15 einen der Bewegungskurve der Zangenbacken 2, 2' entsprechenden Verlauf auf.

Das dargestellte Zahnsegment 15 besitzt vier Zähne 16, zu denen eine Gleitfläche 17 parallel angeordnet ist. Weiterhin weist das erste Formteil 12 drei Löcher 28 auf, für die genaue Positionierung und Befestigung an der Zangenbacke 2.

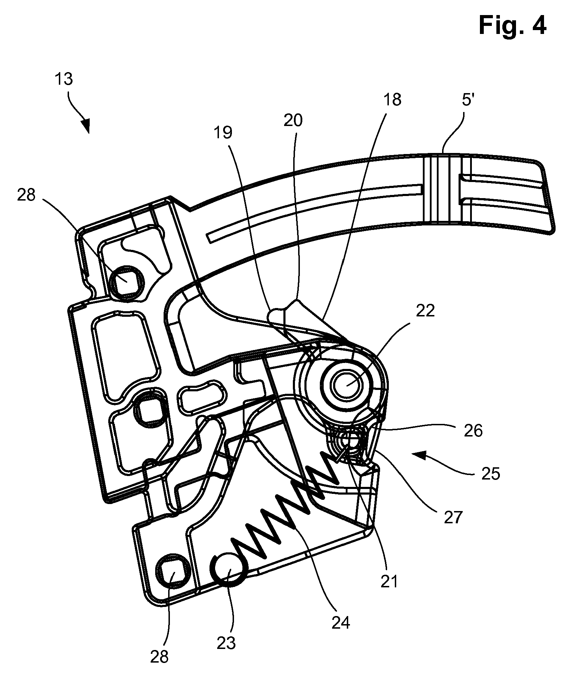

Fig. 4 zeigt das zweite Formteil 13 der Zwangssperre 14 in Detailansicht. Das zweite Formteil 13 weist einen ersten Lagerzapfen 22 auf, an dem die Sperrklinke 18 drehbar gelagert ist. Außerdem weist das zweite Formteil 13 einen zweiten Lagerzapfen 23 auf, an dem die Feder 24 mit ihrem einen Ende befestigt ist. Das gegenüberliegende Ende der Feder 24 ist in einer Öse 21 der Sperrklinke 18 gehalten.

Die Sperrklinke 18 weist an ihrem freien Ende eine Spitzecke 20 auf, die beim Zusammendrücken der Zangenschenkel 3, 3' formschlüssig in die Zähne 16 des Zahnsegments 15 am ersten Formteil 12 eingreift. Zusätzlich weist die Sperrklinke eine Nase 19 auf, die beim Lösen der Zwangssperre 14 auf der Gleitfläche 17 des Zahnsegments 15 am ersten Formteil 12 entlang gleitet.

Die Zwangssperre 14 ist mit einer Auslöseeinrichtung 25 versehen, die eine Kerbe 26 am zweiten Formteil 13 und einen Anschlag 27 im Bereich der Öse 21 an der Sperrklinke 18 umfasst. Durch Einführen eines Stiftes in die Kerbe 26 und seitliches Drücken auf den Anschlag 27 wird die Zwangssperre 14 ausgelöst.

Das zweite Formteil 13 ist obenseitig einstückig mit dem Steg 5' ausgebildet. Weiterhin weist das zweite Formteil 13 drei Löcher 28 auf, für die genaue Positionierung und Befestigung an der Zangenbacke 2'.

### Bezugszeichen

- 1: Abisolier- und Crimpzange
- 2, 2': Zangenbacke
- 3, 3': Zangenschenkel
- 4: Achse
- 5,5': Steg
- 6: Kassette
- 7: Gesenk
- 8: Pressstempel
- 9: Messer
- 10: Aderendhülse
- 11: Magazin
- 12: Erstes Formteil
- 13: Zweites Formteil
- 14: Zwangssperre
- 15: Zahnsegment
- 16: Zahn
- 17: Gleitfläche
- 18: Sperrklinke
- 19: Nase
- 20: Spitzecke
- 21: Öse
- 22: Erster Lagerzapfen
- 23: Zweiter Lagerzapfen
- 24: Feder
- 25: Auslöseeinrichtung
- 26: Kerbe
- 27: Anschlag
- 28: Loch
- A: Abisoliervorrichtung
- R: Rückstellfeder
- S: Seitenschneidevorrichtung

## Patentansprüche

1. Abisolier- und Crimpzange (1) zum Verdrillen eines teilweise freigelegten Endbereichs einer Litzenleitung durch am freien Ende der Zangenbacken (2, 2') in das Zangenmaul vorspringende Stege (5, 5'), und zum Vercrimpen des freigelegten und verdrillten Endbereichs der Litzenleitung mit einer Aderendhülse (10) durch einen im Kreuzungsbereich der Zangenschenkel (3, 3') in einer Kassette (6) geführten Pressstempel (8), der durch eine Schließkraft beim Zusammendrücken der Zangenschenkel (3, 3') in ein Gesenk (7) läuft, zum Verpressen der im Gesenk (7) befindlichen Aderendhülse (10),
**dadurch gekennzeichnet,**
**dass** ein erstes Formteil (12) und ein zweites Formteil (13) jeweils an einer der beiden Zangenbacken (2, 2') in das Zangenmaul hineinragend angeordnet sind, an denen eine Zwangssperre (14) mit einer Sperrklinke (18) und einem Zahnsegment (15) vorgesehen ist, zum Verhindern des Öffnens der Abisolier- und Crimpzange (1) ohne vorheriges Auflaufen des Pressstempels (8) gegen die im Gesenk (7) befindliche Aderendhülse (10), wobei sich am ersten Formteil (12) das Zahnsegment (15) mit einem der Bewegungskurve der Zahnbacken (2, 2') entsprechenden Verlauf befindet und sich am zweiten Formteil (13) die Sperrklinke (18) mittels einer Feder (24) beweglich, aber ortsfest gelagert befindet, und darüber hinaus sind das erste Formteil (12) und/oder das zweite Formteil (13) einstückig mit den Stegen (5, 5') ausgebildet.

2. Abisolier- und Crimpzange (1) nach Anspruch 1, **dadurch gekennzeichnet,**
**dass** das Zahnsegment (15) eine Vielzahl von Zähnen (16) aufweist, die einstückig mit dem ersten Formteil (12) ausgebildet sind, und zu denen eine Gleitfläche (17) parallel angeordnet ist.

3. Abisolier- und Crimpzange (1) nach Anspruch 2, **dadurch gekennzeichnet,**
**dass** die Sperrklinke (18) eine Spitzecke (20) aufweist, die beim Zusammendrücken der Zangenschenkel (3, 3') formschlüssig in die Zähne (16) des Zahnsegments (15) eingreift.

4. Abisolier- und Crimpzange (1) nach Anspruch 2, **dadurch gekennzeichnet,**
**dass** die Sperrklinke (18) zusätzlich eine Nase (19) aufweist, die beim Lösen der Zwangssperre (14) auf der Gleitfläche (17) des Zahnsegments (15) entlang gleitet.

5. Abisolier- und Crimpzange (1) nach Anspruch 1, **dadurch gekennzeichnet,**
**dass** das zweite Formteil (13) einen ersten Lagerzapfen (22) aufweist, an dem die Sperrklinke (18) drehbar gelagert ist.

6. Abisolier- und Crimpzange (1) nach Anspruch 1, **dadurch gekennzeichnet,**
**dass** das zweite Formteil (13) einen zweiten Lagerzapfen (23) aufweist, an dem eine Feder (24) mit einem Ende befestigt ist, deren gegenüberliegendes Ende in einer Öse (21) der Sperrklinke (18) gehalten ist.

7. Abisolier- und Crimpzange (1) nach Anspruch 1, **dadurch gekennzeichnet,**
**dass** die Sperrklinke (18) durch eine Presskraft beim weiteren Zusammendrücken der Zangenschenkel (3, 3') über das Zahnsegment (15) hinausläuft und die Zwangssperre (14) damit freigegeben wird.

8. Abisolier- und Crimpzange (1) nach Anspruch 1, **dadurch gekennzeichnet,**
**dass** die Zwangssperre (14) mit einer Auslöseeinrichtung (25) versehen ist, die eine Kerbe (26) am zweiten Formteil (13) und einen Anschlag (27) an der Sperrklinke (18) umfasst, so dass beim Einführen eines Stiftes in die Kerbe (26) und Drücken auf den Anschlag (27) die Zwangssperre (14) ausgelöst wird.

9. Abisolier- und Crimpzange (1) nach Anspruch 1, **dadurch gekennzeichnet,**
**dass** das erste und das zweite Formteil (12, 13) Löcher (28) für die Befestigung an den Zangenbacken (2, 2') aufweisen.

## Claims

1. A stripping and crimping tool (1) for twisting a partially exposed end portion of a stranded lead through webs (5, 5'), projecting into the pliers mouth at the free end of the pliers jaws (2, 2'), and for crimping the exposed and twisted end portion of the stranded lead with a ferrule (10) by a pressing plunger (8), guided in a cassette (6) in the intersection area of the pliers limbs (3, 3'), the pressing plunger (8) running in a die (7) by a closing force when squeezing the pliers limbs (3, 3') together for compressing the ferrules (10), **characterized in that**
each of a first molded part (12) and a second molded part (13) are arranged on one of the two pliers jaws (2, 2') to protrude into the pliers mouth, on which a forced lock (14) with a locking pawls (18) and a toothed segment (15) is provided for preventing the opening of the stripping and crimping tool (1) without prior strike of the pressing plunger (8) against the ferrule (10), located in the die (7), wherein the toothed segment (15) is located at the first molded part (12) with a course that is corresponding to the movement trajectory of the pliers jaws (2, 2') and the locking pawls (18) are located moveably but stationary hinged at the second molded part (13) by a spring (24), and in addition the first molded part (12) and / or the second molded part (13) are formed in one piece with the webs (5, 5').

2. The stripping and crimping tool (1) according to claim 1, **characterized in that** the toothed segment (15) comprises a plurality of teeth (16) which are formed in one piece with the first molded part (12), and to which a sliding surface (17) is arranged in parallel.

3. The stripping and crimping tool (1) according to claim 2, **characterized in that** the locking pawls (18) comprise a pointed corner which engages with the teeth (16) of the toothed segment (15) by positive-locking, when squeezing the pliers jaws (3, 3') together.

4. The stripping and crimping tool (1) according to claim 2, **characterized in that** the locking pawls (18) further comprise a nose (19) which slides along on the sliding surface (17) of the toothed segment (15) when loosening the forced lock (14).

5. The stripping and crimping tool (1) according to claim 1, **characterized in that** the second molded part (13) comprises a first bearing bolt (22), on which the locking pawls (18) are pivotally supported.

6. The stripping and crimping tool (1) according to claim 1, **characterized in that** the second molded part (13) comprises a second bearing bolt (23), on which a spring (24) is mounted with an end, whose opposite end is held in an eyelet (21) of the locking pawls (18).

7. The stripping and crimping tool (1) according to claim 1, **characterized in that** the locking pawls (18) run beyond the toothed segment (15) by a pressing force when the pliers jaws (3, 3') are further squeezed together and the forced lock (14) is being released thereby.

8. The stripping and crimping tool (1) according to claim 1, **characterized in that** the forced lock (14) provides a trigger means (25) which comprises a notch (26) on the second molded part (13) and a stop (27) at the locking pawls (15), such that when inserting a pin in the notch (26) and pushing the stop (27), the forced lock (14) is triggered.

9. The stripping and crimping tool (1) according to claim 1, **characterized in that** the first and the second molded part (12, 13) comprise holes (28) for attachment to the pliers jaws (2, 2').

## Revendications

1. Pince à dénuder et à sertir (1) pour torsader une extrémité partiellement dégagée d'un câble souple par des brides (5, 5') saillant à l'extrémité libre des mâchoires de la pince (2, 2') dans l'ouverture de la pince et pour sertir l'extrémité dégagée et torsadée du câble souple avec un embout (10) par un poinçon (8) passant au niveau d'un croisement des branches de la pince (3, 3') dans une cassette (6) et qui, sous l'effet d'une force de fermeture lors du rapprochement des branches de la pince (3, 3'), arrive dans une cavité (7) afin de comprimer l'embout (10) se trouvant dans la cavité (7),
**caractérisé en ce**
**qu'**une première pièce moulée (12) et une seconde pièce moulée (13) sont disposées respectivement au niveau d'une des deux mâchoires de la pince (2, 2') en dépassant dans l'ouverture de la pince et qu'il est prévu au niveau de celles-ci un arrêt forcé (14) avec cliquet d'arrêt (18) et segment denté (15) pour empêcher l'ouverture de la pince à dénuder et à sertir (1) sans arrivée préalable du poinçon (8) contre l'embout (10) se trouvant dans la cavité (7), sachant que, au niveau de la première pièce moulée (12), se trouve le segment denté (15) ayant une orientation correspondant à la courbe de mouvement des mâchoires pince (2, 2') et que, au niveau de la seconde pièce moulée (13), se trouve le cliquet d'arrêt (18) mobile au moyen d'un ressort (24) mais s'appuyant à un endroit fixe et que la première pièce moulée (12) et/ou la seconde pièce moulée (13) forment en outre bloc avec les brides (5, 5').

2. Pince à dénuder et à sertir (1) selon la revendication 1, **caractérisée en ce que** le segment denté (15) présente une multitude de dents (16) qui forment bloc avec la première pièce moulée (12) et parallèlement auxquelles une surface de glissement (17) est disposée parallèlement.

3. Pince à dénuder et à sertir (1) selon la revendication 2, **caractérisée en ce que** le cliquet d'arrêt (18) présente un coin pointu (20) qui, lors du rapprochement des branches de la pince (3, 3'), s'engrène par correspondance géométrique dans les dents (16) du segment denté (15).

4. Pince à dénuder et à sertir (1) selon la revendication 2, **caractérisée en ce que** le cliquet d'arrêt (18) présente en outre un bec (19) qui, en cas de relâchement de l'arrêt forcé (14), glisse le long de la surface de glissement (17) du segment denté (15).

5. Pince à dénuder et à sertir (1) selon la revendication 1, **caractérisée en ce que** la seconde pièce moulée (13) présente un premier tourillon (22) sur lequel le cliquet d'arrêt (18) s'appuie en rotation.

6. Pince à dénuder et à sertir (1) selon la revendication 1, **caractérisée en ce que** la seconde pièce moulée (13) présente un second tourillon (23) auquel est fixé par une extrémité un ressort (24) dont l'extrémité opposée est maintenue dans un oeillet (21) du cliquet d'arrêt (18).

7. Pince à dénuder et à sertir (1) selon la revendication 1, **caractérisée en ce que** le cliquet d'arrêt (18), sous l'effet d'une force de compression lors de la poursuite du rapprochement des branches de la pince (3, 3'), va au-delà du segment denté (15) et que l'arrêt forcé (14) est ainsi débloqué.

8. Pince à dénuder et à sertir (1) selon la revendication 1, **caractérisée en ce que** l'arrêt forcé (14) est pourvu d'un dispositif de déclenchement (25) qui comprend une encoche (26) au niveau de la seconde pièce moulée (13) et une butée (27) au niveau du cliquet d'arrêt (18) de sorte que, lors de l'introduction d'une tige dans l'encoche (26) et d'un appui sur la butée (27), l'arrêt forcé (14) soit déclenché.

9. Pince à dénuder et à sertir (1) selon la revendication 1, **caractérisée en ce que** les première et seconde pièces moulées (12, 13) présentent des trous (28) pour fixation aux mâchoires de la pince (2, 2').
